# EUROPEAN PATENT SPECIFICATION

(11) **EP 2 413 209 B1**
(45) Date of publication and mention of the grant of the patent: **17.07.2013**
(21) Application number: 10173986.0
(22) Date of filing: 25.08.2010
(51) Int. Cl.: G05B 19/042, G06F 21/00

(54) **Security key**
Sicherheitsschlüssel
Clé de sécurité

(30) Priority: 29.07.2010 US 368692 P
(43) Date of publication of application: 01.02.2012
(73) Proprietor: Rockwell Automation Limited, Milton Keynes Buckinghamshire MK11 3DR (GB)
(72) Inventor: Creech, Gerald, Danbury, Cambridgeshire CM3 4DE (GB); Meagher, Thomas, Houston,, TX 77084 (US)
(74) Representative: Roberts, Peter David

(56) References cited:
- EP-A1- 2 085 839
- WO-A1-2007/107387
- GB-A- 2 222 281
- US-A- 5 706 426

## Description

### BACKGROUND

### a. Field of the Invention

This invention relates to a security key for use in an Industrial Process Control System suitable for:
Emergency Shutdown systems
Critical process control systems
Fire and Gas detection and protection systems
Rotating machinery control systems
Burner management systems
Boiler and furnace control systems
Distributed monitory and control systems

Such control systems are applicable to many industries including oil and gas production and refining, chemical production and processing, power generation, paper and textile mills and sewage treatment plants.

### b. Related Art

In industrial process control systems, fault tolerance is of utmost importance. Fault tolerance is the ability to continue functioning safely in the event of one or more failures within the system.

Fault tolerance may be achieved by a number of different techniques, each with its specific advantages and disadvantages

An example of a system which provides redundancy is a Triple Modular Redundancy (TMR) system. Using TMR, critical circuits are triplicated and perform identical functions simultaneously and independently. The data output from each of the three circuits is voted in a majority-voting circuit, before affecting the system's outputs. If one of the triplicated circuits fails, its data output is ignored. However, the system continues to output to the process the value (voltage, current level, or discrete output state) that agrees with the majority of the functional circuits. TMR provides continuous, predictable operation.

However, TMR systems are expensive to implement if full TMR is not actually a requirement, and it is desirable to utilise an architecture which provides flexibility so that differing levels of fault tolerance can be provided depending upon specified system requirements.

Another approach to fault tolerance is the use of hot-standby modules. This approach provides a level of fault tolerance whereby the standby module maintains system operation in the event of module failure. With this approach there may be some disruption to system operation during the changeover period if the modules are not themselves fault-tolerant.

Fault tolerant systems ideally create a Fault Containment Region (FCR) to ensure that a fault within the FCR boundary does not propagate to the remainder of the system. This enables multiple faults to co-exist on different parts of a system without affecting operation.

Fault tolerant systems generally employ dedicated hardware and software test and diagnostic regimes that provide very fast fault recognition and response times to provide a safer system.

Safety control systems are generally designed to be 'fail-operational/fail-safe'. Fail operational means that when a failure occurs, the system continues to operate: it is in a fail-operational state. The system should continue to operate in this state until the failed module is replaced and the system is returned to a fully operational state.

An example of fail safe operation occurs, for example if, in a TMR system, a failed module is not replaced before a second failure in a parallel circuit occurs, the second failure should cause the TMR system to shut down to a fail-safe state. It is worth noting that a TMR system can still be considered safe, even if the second failure is not failsafe, as long as the first fault is detected and communicated, and is itself failsafe.

EP2085839 relates to a method and apparatus for interconnecting modules in a industrial process control system.

It is desirable that unauthorised access to the control program controlling such industrial process controllers is prevented.

### SUMMARY OF THE INVENTION

According to the invention there is provided an apparatus for industrial process control comprising a plurality of processor assemblies and a plurality of input/output assemblies in communication with one another via a backplane portion in which the apparatus further comprises a security dongle connectable to the backplane portion and containing a resistive element corresponding to each processor assembly and having a respective first predetermined resistance and in which access to a first set of control programs on each processor assembly is disabled unless a resistive element of said respective first predetermined resistance is detected.

Preferably the apparatus comprise three replicated processor assemblies and in which the security key comprises three resistive elements. Preferably there is also an extension cable such that the security key is connectable remotely from said processor assemblies and backplane portion.

In one embodiment there is also means for changing the resistive elements to a respective second predetermined resistance and in which access to a second set of control programs on each processor is disabled unless a restive element of said respective second predetermined resistance is detected.

### BRIEF DESCRIPTION OF THE DRAWINGS

Embodiments of the invention will now be described, by way of example only, with reference to the accompanying drawings, in which:
Figure 1 is an illustration showing the architecture of a distributed industrial process control system which uses the apparatus and method of the present invention;
Figure 2 illustrates schematically a controller of the industrial process control system illustrated in Figure 1;
Figure 3 illustrates a possible configuration of a controller;
Figure 4 shows various options for an input assembly and output assembly of Figure 3
Figure 5 shows one possible configuration implementing a two out of three voting strategy;
Figure 6 illustrates a second possible configuration for a two out of three voting strategy;
Figure 8 shows an apparatus which may be used for preventing unauthorised access to the processor module illustrated in Figure 7.

### DETAILED DESCRIPTION

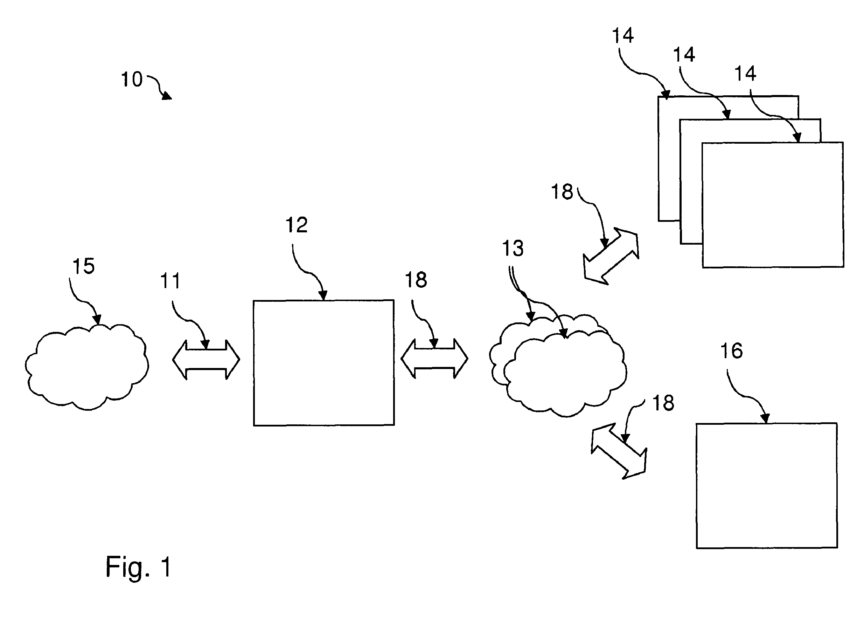

In the Industrial Process Control System shown in Figure 1, a distributed architecture is designed to be used in different SIL (safety integrity level) environments, so that if a high SIL is required it can be provided, but if a low SIL is all that is needed the system can be reduced in complexity in order to reduce unnecessary extra costs.

An exemplary Industrial Process Control System 10, comprises a workstation 12 one or more controllers 14 and a gateway 16. The workstation 12 communicates with the controllers 14 and the gateway 16 via Ethernet connections 18 to one or more control networks 13. Multiple Ethernet connections 18 provide redundancy to improve fault tolerance. The workstation 12 may be connected via a conventional Ethernet connection 11 to another external network 15.

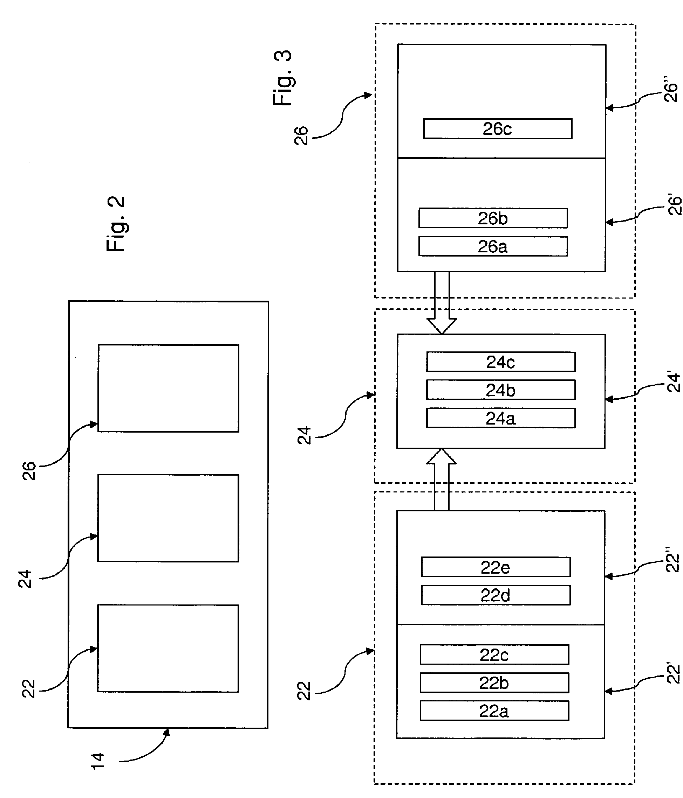

A controller 14 will now be described in more detail with reference to Figures 2 and 3.

Figure 2 illustrates a schematic diagram of the controller 14 comprising an input assembly 22, a processor assembly 24 and an output assembly 26. In this schematic illustration the input assembly 22 and output assembly 26 are on different backplanes but they may equally well share a single backplane.

Assemblies 22, 24, 26 are created from one or more communications backplane portions which have three slots to accommodate up to three modules together with termination assemblies which have one two or three slots, and which interface to field sensors and transducers. A termination assembly may straddle two contiguous backplane portions. A module comprises a plug in card with multiple connectors for plugging onto a communications backplane and a termination assembly.

It will be appreciated that having three slots in a communications backplane portion is one design option and other design options with greater (or fewer) slots are possible without departing from the scope of the invention as defined in the appended claims.

Figure 3 illustrates a possible physical configuration of the controller 14. In this embodiment of the invention, the input assembly 22, output assembly 26 and processor assembly 24 are physically separated from one another by grouping the modules of different types onto separate communications backplanes.

In the example shown, the input assembly 22 comprises two communications backplane portions, 22', 22". The first backplane portion 22' has a triplex input termination assembly and three input modules 22a, 22b, 22c, the second backplane portion 22" has a duplex input termination assembly 22" and two input modules 22d, 22e. The processor assembly 24 comprises a single processor backplane portion 24' having three processor modules 24a, 24b and 24c. The output assembly 26 comprises two backplane portions 26', 26". The first backplane portion 26' has a duplex output termination assembly with two output modules 26a, 26b and the second backplane portion 26" has a simplex output termination assembly with a single output module 26c.

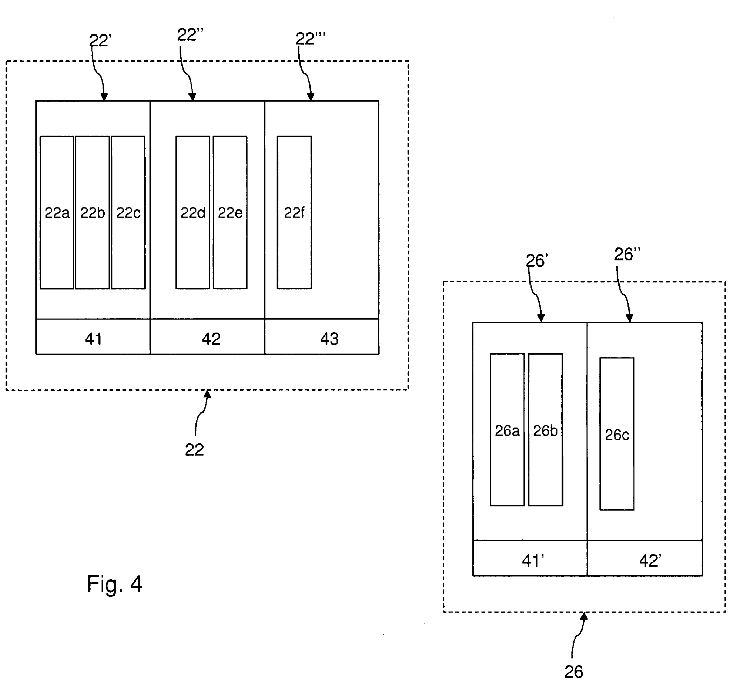

The flexibility of the input assembly 22, will now be described, in more detail with reference to Figure 4.

An input assembly 22 comprises one or more backplane portions and termination assemblies 22' 22" 22'" etc. For example, a triplex portion 22' having three modules 22a, 22b, 22c might be used for high availability requirement, a duplex portion 22" having two modules 22d, 22e might be provided for fault tolerant applications and a simplex portion 22'" with a single modules 22f might be provided for failsafe applications. The termination assemblies may be provided with different types of field conditioning circuits. For example assembly 22' may be provided with a 24V DC field conditioning circuit 41 assembly 22" may be provided with a 120V DC field conditioning circuit 42 and assembly 22'" may be provided with a 4-20mA field conditioning circuit 43. Similarly possible configurations are shown for an output assembly 26. It will be appreciated that numerous configurations of backplane portions and termination assemblies with various different numbers of modules and various different types of field conditioning circuits are possible and the invention is not limited to those shown in these examples.

Where an assembly provides more than one module for redundancy purposes it is possible to replace a failed module with a replacement module whilst the industrial process control system is operational which is also referred to herein as online replacement (i.e. replacement is possible without having to perform a system shutdown). Online replacement is not possible for a simplex assembly without interruption to the process. In this case various "hold last state" strategies may be acceptable or a sensor signal may also be routed to a different module somewhere else in the system.

The processor assembly configures a replacement processor module using data from a parallel module before the replacement module becomes active.

The field conditioning circuits 41, 42, 43 transform a signal received from a sensor monitoring industrial process control equipment to a desired voltage range, and distribute the signal to the input modules as required. Each field conditioning circuit 41, 42, 43 is also connected to field power and field return (or ground) which may be independently isolated on a channel by channel basis from all other grounds, depending on the configuration of the input termination assembly. Independent channel isolation is the preferred configuration because it is the most flexible. The field conditioning circuits 41, 42, 43 comprise simple non active parts and are not online replaceable.

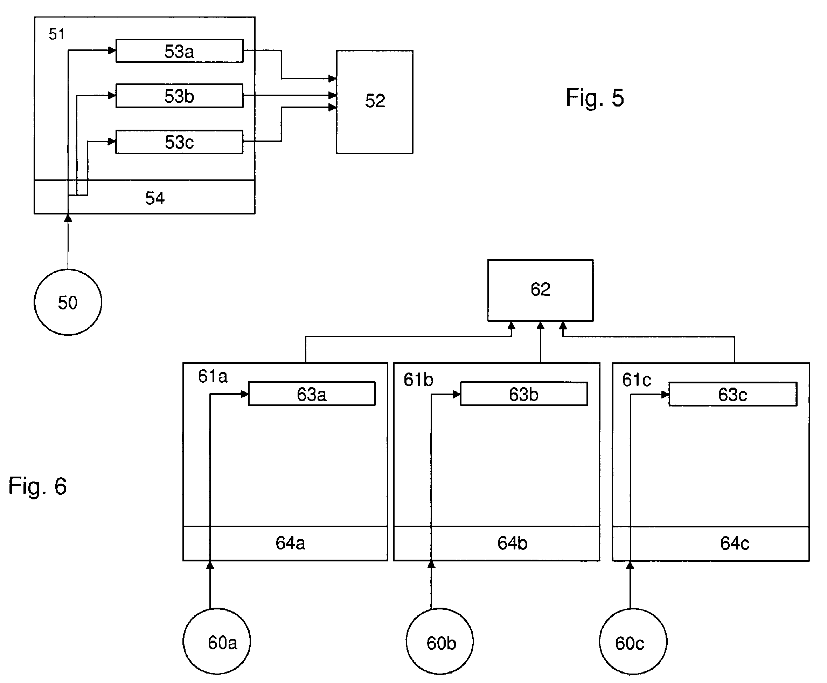

Figure 5 and Figure 6 illustrate the flexibility of the architecture described herein showing different configurations for a triplex system for generating a signal with a high availability requirement. Referring to Figure 5, a three module input assembly 51 receives a signal from a sensor 50 via a field conditioning circuit in termination assembly 54. The field conditioning circuit 54 transforms the signal to a desired voltage range and distributes the signal to three replicated input modules 53a, 53b, 53c. Each input module processes the signal and the results are sent to a two out of three voter 52 to generate a result signal in dependence thereon.

Referring to Figure 6, replicated sensors 60a, 60b, 60c each send a signal to a respective simplex assemblies 61 a, 61 b, 61 c via respective field conditioning circuits in termination assemblies 64a, 64b, 64c. Each input module 63a, 63b, 63c processes the signal and sends an output to a two out of three voter 62 to generate a signal in dependence thereon. It will be appreciated that many variations and configurations are possible in addition to those illustrated here.

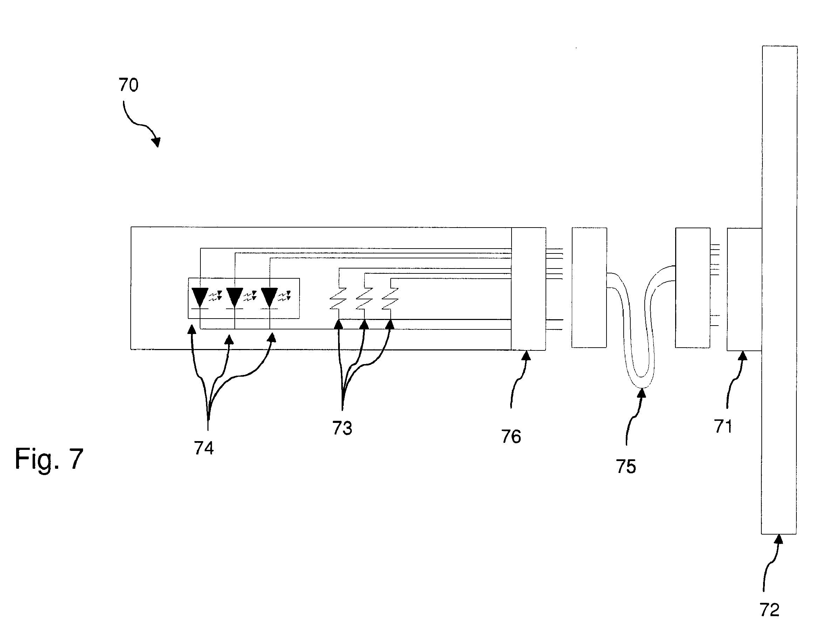

Figure 7 show a security key 70 in accordance with this invention. The key 70 comprises a small pocket-size security dongle with a connection portion 76 that is be inserted into a mating connector 71 on the communications backplane 72 and which is arranged to allow changes to be made to the safety responsible control program residing on an application processor on a processor module 24a-24c The key 70 comprises three keying resistors 73, each with their own return wire, a respective one for each of the potentially three processor modules. Each resistor 73 has a predetermined resistance which may be detected by a respective processor module. Three LED's 74 are also provided, with their own return wire, so that the LED current won't affect the resistor measurement. These LED's 74 are used to provide the status of the security function.

Each processor module 24a-24c is arranged to detect and measure the resistance of a respective resistor 73 and to disable access to a first set of control programs in the event that the detected resistance does not match a predetermined value.

The use of an optional extension cable 75 allows the security dongle to be mounted remotely on a panel with other system control functions.

Means (not shown) may also be incorporated into the security key which is used to switch the keying resistors to a different value for the purpose of performing a second set of system control functions such as system reset requests, and other system related functions, in this case the processor module will detect and measure the respective resistance and disable access to these functions if the resistance does not match a second predetermined value.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

## Claims

1. An apparatus for industrial process control comprising a plurality of processor assemblies (24a, 24b, 24c) and a plurality of input/output assemblies in communication with one another via a backplane portion (72), **characterised in that** the apparatus further comprises a security key (70) connectable to the backplane portion (72) and containing a resistive element (73) corresponding to each processor assembly (24a, 24b, 24c) and having a respective first predetermined resistance and in which access to a first set of control programs on each processor assembly (24a, 24b, 24c) is disabled unless a resistive element (73) of said respective first predetermined resistance is detected.

2. The apparatus of claim 1, comprising three replicated processor assemblies (24a, 24b, 24c) and in which the security key (70) comprises three resistive elements (73).

3. The apparatus of claim 1, further comprising an extension cable (75) such that the security key (70) is connectable remotely from said processor assemblies (24a, 24b, 24c) and backplane portion (72).

4. The apparatus of claim 1, further comprising means for changing the resistive elements (73) to a respective second predetermined resistance and in which access to a second set of control programs on each processor (24a, 24b, 24c) is disabled unless a restive element (73) of said respective second predetermined resistance is detected.

## Patentansprüche

1. Gerät für industrielle Prozesssteuerung, umfassend eine Vielzahl von Prozessor-Baugruppen (24a, 24b, 24c) und eine Vielzahl von Eingabe/Ausgabe-Baugruppen in Kommunikation miteinander über einen Rückwandplatinen-Abschnitt (72), **dadurch gekennzeichnet, dass** das Gerät ferner einen Sicherheitsschlüssel (70) umfasst, verbindbar mit dem Rückwandplatinen-Abschnitt (72) und enthaltend ein Widerstandselement (73) korrespondierend mit jeder Prozessor-Baugruppe (24a, 24b, 24c), und aufweisend einen jeweiligen ersten im Voraus bestimmten Widerstand und in dem Zugang zu einem ersten Satz von Steuerprogrammen in jeder Prozessor-Baugruppe (24a, 24b, 24c) deaktiviert ist, außer wenn ein Widerstandselement (73) des jeweiligen ersten im Voraus bestimmten Widerstands detektiert wird.

2. Gerät nach Anspruch 1, umfassend drei replizierte Prozessor-Baugruppen (24a, 24b, 24c) und in dem der Sicherheitsschlüssel (70) drei Widerstandselemente (73) umfasst.

3. Gerät nach Anspruch 1, ferner umfassend ein Verlängerungskabel (75), so dass der Sicherheitsschlüssel (70) entfernt von den Prozessor-Baugruppen (24a, 24b, 24c) und dem Rückwandplatinen-Abschnitt (72) verbindbar ist.

4. Gerät nach Anspruch 1, ferner umfassend Mittel zum Wechseln der Widerstandselemente (73) zu einem jeweiligen zweiten im Voraus bestimmten Widerstand und in dem Zugang zu einer zweiten Gruppe von Steuerprogrammen in jedem Prozessor (24a, 24b, 24c) detektiert ist, außer wenn ein Widerstandselement (73) des jeweiligen zweiten im Voraus bestimmten Widerstands detektiert wird.

## Revendications

1. Appareil de contrôle de procédé industriel comprenant une pluralité d'ensembles processeurs (24a, 24b, 24c) et une pluralité d'ensembles d'entrée/de sortie en communication les uns avec les autres par le biais d'une partie de fond de panier (72), **caractérisé en ce que** l'appareil comprend en outre une clé de sécurité (70) connectable à la partie de fond de panier (72) et contenant un élément résistif (73) correspondant à chaque ensemble processeur (24a, 24b, 24c) et ayant une première résistance prédéterminée respective et dans lequel l'accès à un premier groupe de programmes de contrôle sur chaque ensemble processeur (24a, 24b, 24c) est indisponible à moins qu'un élément résistif (73) de ladite première résistance prédéterminée respective soit détecté.

2. Appareil selon la revendication 1, comprenant trois ensembles processeurs répliqués (24a, 24b, 24c) et dans lequel la clé de sécurité (70) comprend trois éléments résistifs (73).

3. Appareil selon la revendication 1, comprenant en outre un câble de prolongement (75) de telle sorte que la clé de sécurité (70) est connectable à distance desdits ensembles processeurs (24a, 24b, 24c) et de la partie de fond de panier (72).

4. Appareil selon la revendication 1, comprenant en outre des moyens pour faire passer les éléments résistifs (73) à une seconde résistance prédéterminée respective et dans lequel l'accès à un second groupe de programme de contrôle sur chaque processeur (24a, 24b, 24c) est indisponible à moins qu'un élément résistif (73) de ladite seconde résistance prédéterminée respective soit détecté.
